# EUROPEAN PATENT APPLICATION

(11) **EP 2 505 436 A2**
(43) Date of publication of application: **03.10.2012**
(21) Application number: 12151096.0
(22) Date of filing: 17.03.2009
(51) Int. Cl.: B60R 21/239

(54) **AIRBAG SYSTEM WITH IMPROVED PERFORMANCE FOR A WIDE RANGE OF LOADS**

(30) Priority: 17.03.2008 IL 19021408
(62) Divisional of application: 09722159.2
(71) Applicant: Rafael Advanced Defense Systems Ltd., 31021 Haifa (IL)
(72) Inventor: Shahar, Rahav, 19239 Kibbutz Dalia (IL); Ben-Soussan, Mordechai, 27070 Kiryat Byalik (IL); Albagli, David, 32297 Haifa (IL); Ben Moshe, Alon, 36001 Nofit (IL)
(74) Representative: Modiano, Micaela Nadia

(57) **Abstract**

An air bag system comprising an airbag having at least one pressure release vent sealed by a sealing diaphragm wherein a variation of one of a diameter of said pressure release vent and a thickness of said sealing diaphragm determines a breaching pressure of said sealing diaphragm. The at least one pressure release vent can be configured as an array of pressure release vents, wherein some of the pressure release vents in the array have diameters that are different from one to another. The differing pressure release vent diameters and thicknesses are configured to provide a plurality of pressure release stages or are configured to provide a continuous pressure release range. At least a portion of an edge of said pressure release vent is configured with a controlled breaching mechanism.

A method for holding an overpressure state in an airbag, the method comprising (a) providing the airbag with an array of bursting pressure release vents having various breaching pressures and (b) introducing a residual flow of gases into the airbag after initial inflation.

## Description

### FIELD AND BACKGROUND OF THE INVENTION

The present invention relates to airbags and, in particular, it concerns an airbag system having a bursting pressure release vent.

U.S. Patent Application No. 5,704,639 to Cundill et al. discloses a sealing member having a frangible region with a weakening line located at least partially over said ventilation opening.

U.S. Patent Application No. 5,603,526 to Buchanan describes coverings that include a main body have a peripheral shape and size to extend beyond the edge of the vent opening. The main body overlies and completely covers the vent opening. The periphery of the covering is frangibly secured to the cushion, such as by a tear seam.

### BRIEF DESCRIPTION OF THE DRAWINGS

The invention is herein described, by way of example only, with reference to the accompanying drawings, wherein:
FIG. 1 is a schematic front view of both a first preferred embodiment and a second preferred embodiment of an airbag bursting pressure release vent constructed and operational according to the teachings of the present invention;
FIG. 2 is a schematic cross sectional view of either of the airbag bursting pressure release vents of FIG. 1;
FIG. 3 is a photograph of a first preferred embodiment of an airbag bursting pressure release vent of FIG. 1 installed on test equipment shown here before the test;
FIG. 4 is a photograph of the airbag bursting pressure release vent of FIG. 3 installed on test equipment shown here after the test;
FIGs. 5-10 are photographs of a test of the system of the present invention in which FIG. 5 is taken before impact;
FIG. 6 is taken at initial impact;
FIG. 7 is taken after partial deflation of the airbag;
FIG. 8 is taken after a majority deflation of the airbag;
FIGs. 9 and 10 show several bursting pressure release vents after the test;
FIG. 11 is a schematic representation of the airbag system of FIGs. 5-10, showing the various states of deflation in a single overlapping illustration;
FIG. 12 is a graph representing bursting pressure against time;
FIG. 13 is a graph representing bursting pressure against vent hole diameter;
FIG. 14 is a cross sectional view of a preferred embodiment of an airbag system constructed and operational according to the teachings of the present invention, illustrated here before inflation;
FIG. 15 is a photograph of the airbag system of FIG. 14; and
FIG. 16 is a photograph of the airbag of FIG. 14 shown here in a folded state to illustrate a preferred method of folding.

### DESCRIPTION OF THE PREFERRED EMBODIMENTS

The present invention is airbag having a bursting pressure release vent.

The principles and operation of airbag according to the present invention may be better understood with reference to the drawings and the accompanying description.

By way of introduction, the airbag system of the present invention includes three innovative features that will be discussed herein below. These features are a simple and inexpensive bursting pressure release vent, an ability to maintain pressure inside the airbag for a longer period of time and a method for folding the airbag that helps to lower to pressure applies to the bursting pressure release vents during the deployment process.

It should be noted that the terms "burst," "bursting," breach" and "breaching" are used interchangeably herein and refer to the rupturing of the vent diaphragm material.

For breaching the sealing diaphragm, all prior art inventions use an assortment of different mechanical mechanisms such as weakening lines. The present invention, however, refrains from using such mechanisms and instead uses an intact diaphragm whose intrinsic frangibility provides the breaching mechanism, which occurs as a spontaneous mechanical failure of the selected diaphragm material. Therefore, it will be understood that the breaching pressure may be determined by the thickness of the diaphragm. The diaphragm may be constructed of substantially any suitable material such as, but not limited to, flexible plastics, silicones, and silicone foams. Such a material when used with thicknesses in the range of about 0.1 mm to 8 mm will provide bursting pressures in a range of from 0.05 up to 0.95 overpressure.

The benefits of the pressure release vent of the present invention include ease of manufacturing by simplifying the attachment of the vent sealing diaphragm. The creation of a weakening line or slit in a thin diaphragm require precision so as not to cut it too deep, which might cause the slit to breach at a pressure too low, or to cut it too thin, which might cause the slit to not breach at the intended pressure. Further, the shelf life of a sealing diaphragm without a weakening line is longer than one with such line. Furthermore, the durability of a diaphragm configured with a uniform thickness, when installed on a helicopter and subject to an intense shock, vibration and pressure environment, is clearly superior to that of a purposely weakened diaphragm.

It should be note, as will be readily appreciated, that the diameter of the vent hole will also influence the breaching pressure of the diaphragm. Therefore, the present invention provides an embodiment in which an array of pressure release vents having different vent diameters are configured in the airbag. Such an array enables a single airbag embodiment to for a wide range of weights. This enables using a standard airbag to be deployed of a fleet of different helicopters, by non-limiting example, and/or using the same airbag for the same helicopter carrying different loads. This eliminates the need to install and remove airbag units in accordance with the helicopter's load during each individual flight.

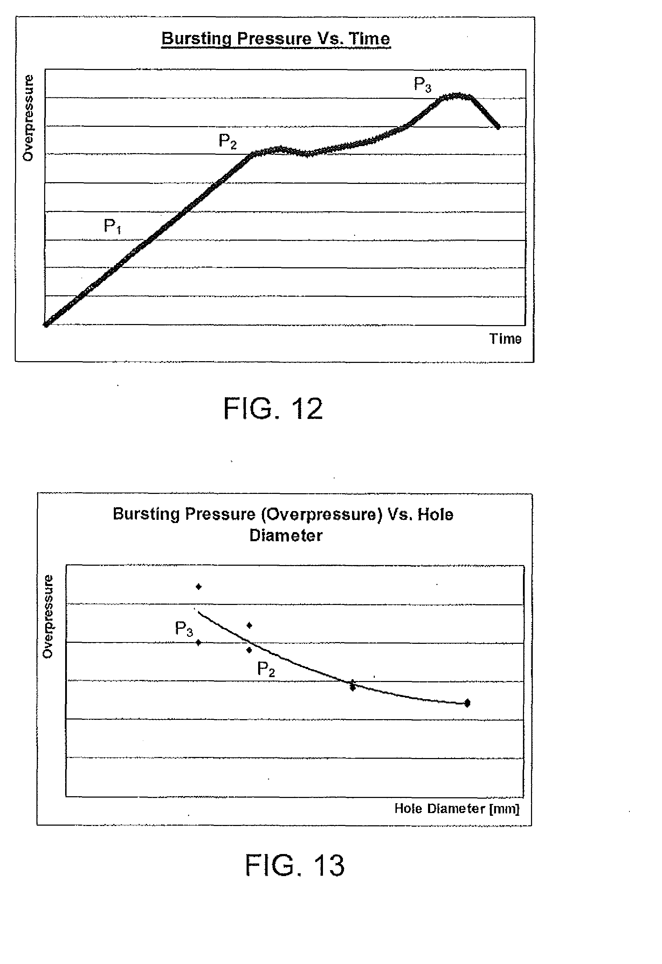

It will be appreciated that the larger the diameter D of the vent, the less pressure (P) is required to breach the diaphragm sealing the vent. The relation between these two variables P (D) is demonstrated in the Graph shown in Figure 13.

When using an array of vents of varying diameters, upon the first impact of the airbag with, by non-limiting example, the ground occurs the first vents to be breached are the largest ones in the array.

For a relatively light helicopter, only the largest vents may be breached since most of the shock absorbance of the airbag system has been performed, and there may be for other vents to be breached.

However, for a relatively heavy helicopter the pressure inside the airbag will keep building up as the helicopter continues to move toward the ground. Therefore, additional vents in the array which have smaller diameters will be breached in order to aide the shock absorbance of the airbag system.

Therefore, the breaching pressure limit of the airbag system of the present invention does not necessarily include a single pressure valve. The airbag system may be configured to include several pressure release stages or even a continuous pressure release range.

As mentioned above, alternatively to altering the vent hole diameter, the sealing diaphragm thickness T may be altered to cause the same effect.

In practice, both the vent hole diameter D and the diaphragm thickness T may be varied to create different combinations of these two variables to achieve a desired breach pressure P. Different considerations such as manufacturing simplicity and/or durability may then be considered.

As mentioned briefly above, the airbag on the present invention holds an overpressure state for a period of time longer than 500mS, which is considerably longer than present airbag systems. This is achieved by the introduction of a residual flow of gases into the airbag and the use of an array of bursting pressure release vents having various breaching pressures.

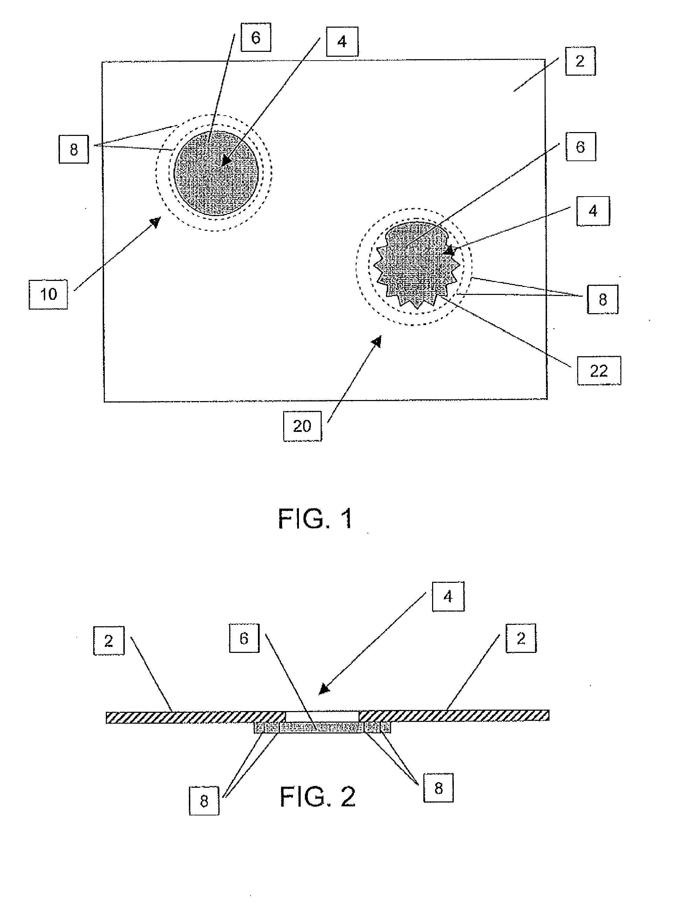

Referring now to the drawings, Figure 1 illustrates a section of an airbag **2** into which a first **10** and second **20** embodiments of the bursting pressure release vents of the present invention are configured. It should be noted that although the vent holes **4** of the present invention are illustrated herein as circular, this is not intended as a limitation to the scope of the present invention and embodiments in which the vent holes are configured in other geometric shapes or closed curves are within the scope of the present invention.

Each embodiment **10** and **20** includes a vent hole **4** that is sealed by a diaphragm **6.** The diaphragm may be attached to the airbag by substantially any suitable attachment method such as, but not limited to, adhesives, stitching and plastic welding or soldering. The embodiments illustrated herein are shown, by non-limiting example, as having the diaphragm stitched **8** in place.

As illustrated in embodiment **20,** the vent hole **4** in the airbag **2** may alternatively be cut with a jagged edge **22.** This design can provide a controlled breaching mechanism for the vents without manipulation of the **diaphragm 6** during manufacturing. When the airbag **2** is inflated, the controlled breach will occur on the edge **22** of the vent hole **4.** That is to say, at the interface of the vent hole **4** and the diaphragm **6.** The jagged edge **22** can be limited to just a portion of the periphery of the vent hole **4,** as illustrated here, in order to keep the diaphragm from being blown free. However, it will be understood that the jagged edge **22** portion may range for a single point to the full 360° of the vent hole **4.**

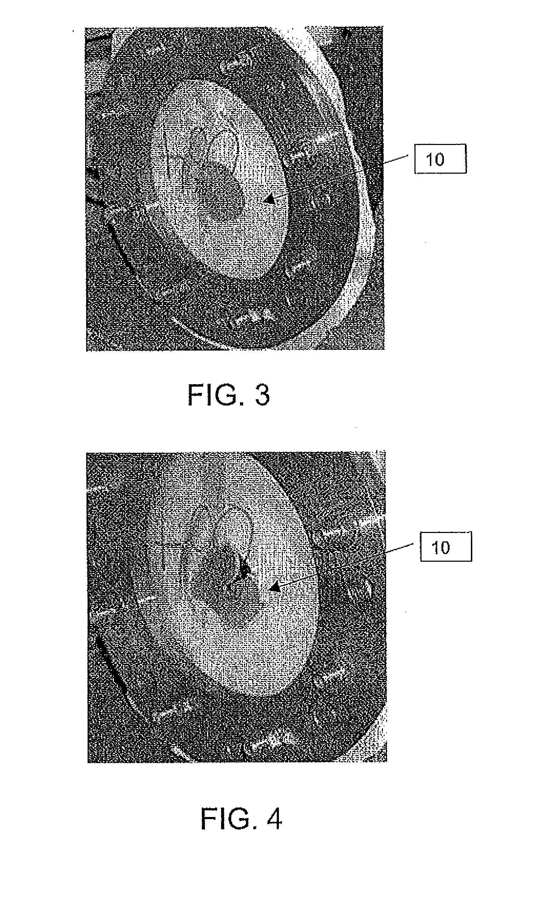

Figures 3 and 4 show a test of the first preferred embodiment of a bursting pressure release vent of the present invention in which Figure 3 shows the vent **10** intact before the test and Figure 4 shows the breached vent **10** after the test.

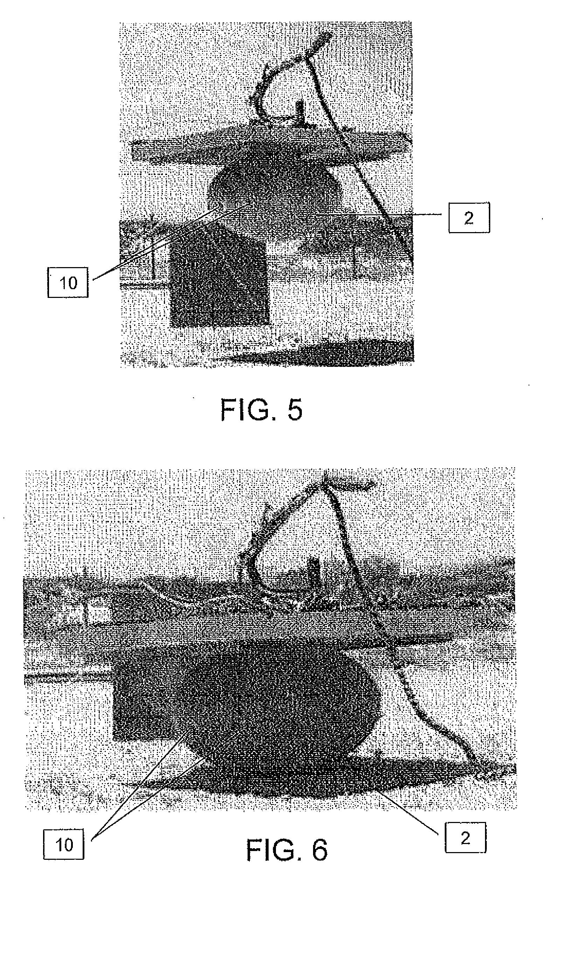

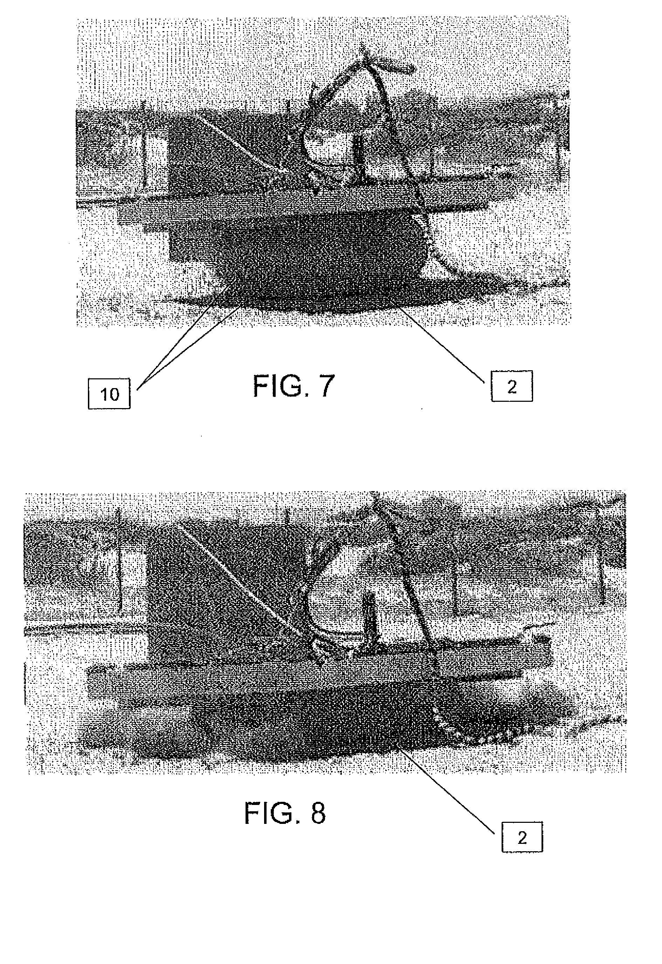

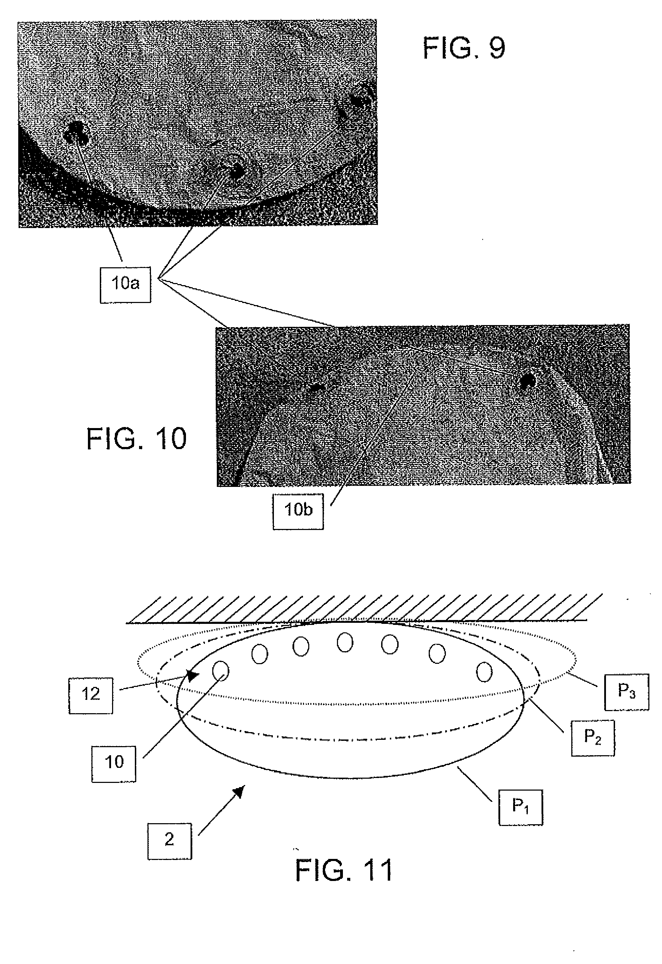

Figures 5-13 relate to a test of the airbag system of the present invention in which the photographs of Figures 5-10 show the following, Figure 5 is taken before impact, Figure 6 is taken at initial impact, Figure 7 is taken after partial deflation of the airbag, Figure 8 is taken after a majority deflation of the airbag, Figures 9 and 10 show several bursting pressure release vents after the test.

Figure 11 schematically represents in a single overlapping illustration the airbag system of the present invention at the various states of deflation shown in Figures 5-8. Figure 12 is a graph representing diaphragm bursting pressure against time. Figure 13 is a graph representing diaphragm bursting pressure against vent hole diameter.

The photographs of Figures 5-8 are illustrated in Figures 11-13 where Figure 6 is depicted as P₁, Figure 7 is depicted as P₂ and Figure 8 is depicted as P₃.

Attention is drawn to the array **12** of pressure release vents **10** as illustrated in the non-limiting example of Figure 11 as a single row of vents **10** partially circumscribing the airbag **2.** It should be noted that such an array may configured in substantially any suitable arrangement such as, but not limited to, multiple rows or any other suitable matrix.

Turning now to Figures 9 and 10, it is pointed out that the diaphragms of pressure release vents **10a** burst during the test, while pressure release vent **10b,** which, although not easily seen here, has a smaller diameter vent hole than vents **10a.**

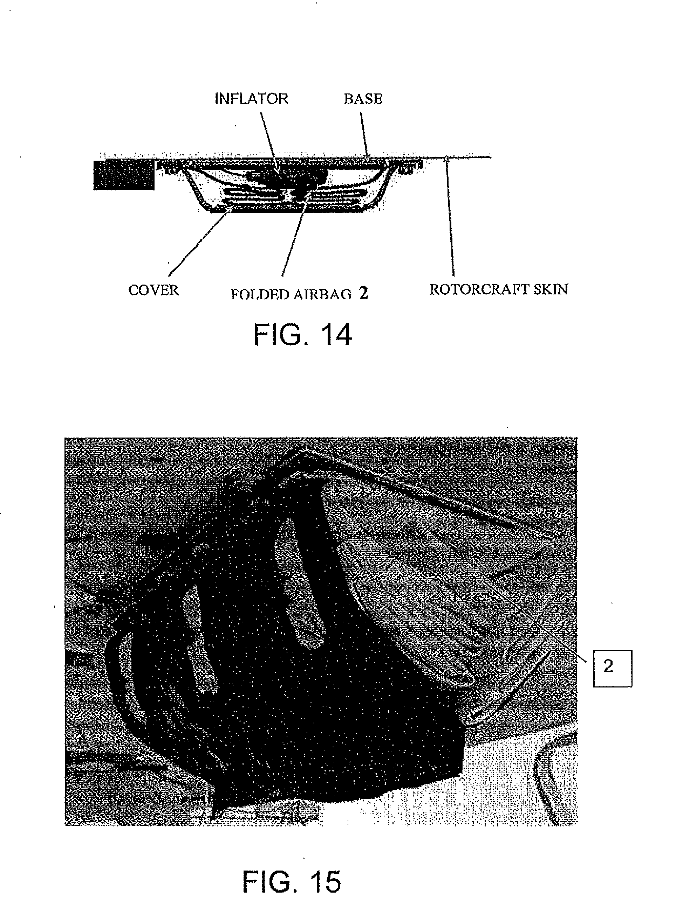

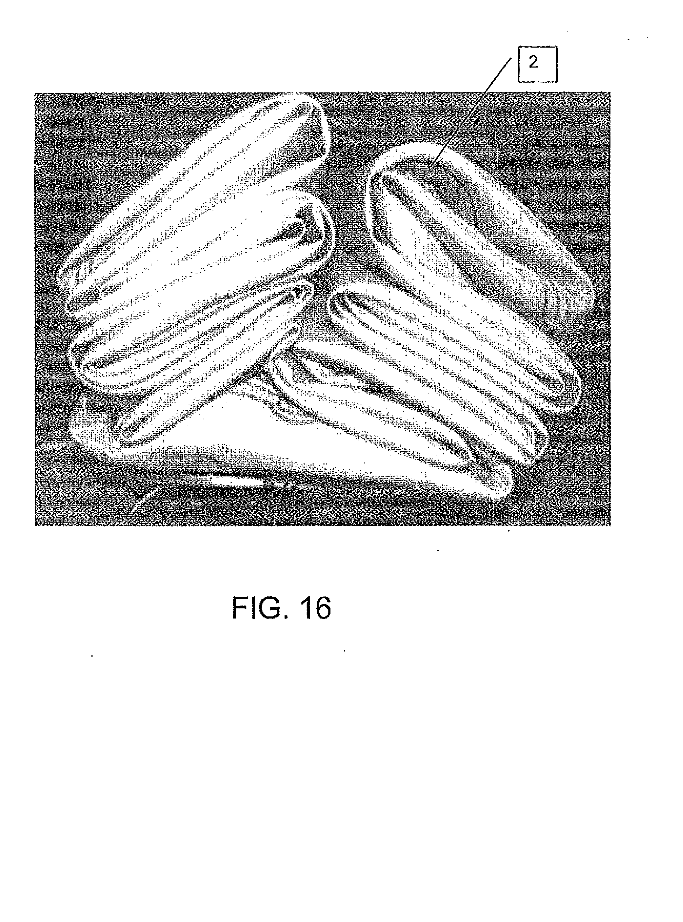

As illustrated in Figures 14-16 the airbag **2** present invention is folded in a modified accordion pattern, such that the bursting pressure release vents are placed in the final folds. This unique geometry serves to mitigate the heat and pressure waves caused by the inflation system before they reach the bursting pressure release vents, thus preventing an early breach of the bursting pressure release vents.

It will be appreciated that the above descriptions are intended only to serve as examples and that many other embodiments are possible within the spirit and the scope of the present invention.

## Claims

1. An air bag system comprising an airbag having at least one pressure release vent sealed by a sealing diaphragm wherein a variation of one of a diameter of said pressure release vent and a thickness of said sealing diaphragm determines a breaching pressure of said sealing diaphragm.

2. The airbag system of claim 1, wherein said at least one pressure release vent is configured as an array of pressure release vents.

3. The airbag system of claim 2, wherein some of said pressure release vents in said array have diameters that are different from other said pressure release vents in said array.

4. The airbag system of claim 3, wherein said differing pressure release vent diameters are configured to provide a plurality of pressure release stages.

5. The airbag system of claim 3, wherein said differing pressure release vent diameters are configured to provide a continuous pressure release range.

6. The airbag system of claim 1, wherein at least a portion of an edge of said pressure release vent is configured with a controlled breaching mechanism.

7. The airbag system of claim 6, wherein said controlled breaching mechanism includes said edge of said pressure release vent being configured as a jagged edge.

8. A method for holding an overpressure state in an airbag, the method comprising:
(a) providing the airbag with an array of bursting pressure release vents having various breaching pressures; and
(b) introducing a residual flow of gases into the airbag after initial inflation.

9. The method of claim 8, further including holding the overpressure state for a period of time longer than 500 mS.

10. A method for folding an airbag having bursting pressure release vents, the method comprising folding the airbag in a modified accordion pattern, such that the bursting pressure release vents are placed in the final folds, so as to mitigate heat and pressure waves caused by an inflation system before said heat and pressure waves reach said bursting pressure release vents, thus preventing an early breach of the bursting pressure release vents.
